# EUROPEAN PATENT SPECIFICATION

(11) **EP 3 657 769 B1**
(45) Date of publication and mention of the grant of the patent: **31.08.2022**
(21) Application number: 19214044.0
(22) Date of filing: 30.03.2017
(51) Int. Cl.: H04M 15/00, H04L 12/14, H04W 4/24, H04M 3/22, H04M 3/42

(54) **METHOD AND SYSTEM FOR DETECTION OF INTERCONNECT BYPASS USING TEST CALLS TO REAL SUBSCRIBERS**
VERFAHREN UND SYSTEM ZUR ERKENNUNG EINER VERBINDUNGSUMGEHUNG UNTER VERWENDUNG VON TESTANRUFEN BEI ECHTEN TEILNEHMERN
PROCÉDÉ ET SYSTÈME DE DÉTECTION DE DÉRIVATION D'INTERCONNEXION UTILISANT DES APPELS DE TEST À DES ABONNÉS RÉELS

(30) Priority: 31.03.2016 EP 16163224
(43) Date of publication of application: 27.05.2020
(62) Divisional of application: 17714732.9
(73) Proprietor: SIGOS BVBA, 9050 Gent-Ledeberg (BE)
(72) Inventor: MIRZABAYOV, Nijat, 1000 Brussel (BE); VAN DER MEEREN, Guy, 9052 Zwijnaarde (Gent) (BE); VERLINDE, Dirk, 8200 Sint-Andries (BE)
(74) Representative: IP HILLS NV

(56) References cited:
- EP-A1- 2 509 294
- EP-A1- 2 671 372
- EP-B1- 2 671 372
- US-A1- 2012 021 720

## Description

### Field of the Invention

The present invention generally relates to detecting the presence of an interconnect bypass in communication networks, in particular in wireless telecommunication networks such as for example Global System for Mobile communications (GSM) networks, Universal Mobile Telecommunications System (UMTS) networks, or similar wireless telecommunication networks, but also in wired telecommunication networks or Voice over Internet Protocol (VoIP) networks. Such an interconnect bypass is also called a Subscriber Identity Module box (SIMbox), an interconnect gateway or GSM gateway, or a leaky Private Branch eXchange (leaky PBX).

The present invention in particular concerns improved detection of interconnect bypass in a controlled environment using test calls, i.e. calls made on purpose from a certain origin at a certain time with the aim to detect fraud.

### Background of the Invention

When a telecommunication network operator provides access from his network to a network of another telecommunication network operator and vice versa, both operators, by means of agreement or sometimes subject to regulatory requirements, set up a suitable interconnection facility which is subjected to extensive testing in order to assess the technical reliability and the quality of service of the interconnection facility such that agreed upon or regulatory standards are met. In addition to the technical arrangements there are in many cases also interconnection charges that the telecommunication network operator receiving a call charges for the calls passing through the interconnection facility. When a calling party calls from another telecommunication network to the network of the telecommunication network operator of the receiving party, for example because the calling party is a client of a network operator different from the receiving network operator or because the calling party is travelling abroad and is making use of the network of a partnering network operator that provides roaming services to its own network operator, this call has to pass through the interconnection facility.

An interconnect bypass attempts to bypass the interconnection facilities of the network operator thereby avoiding at least part of the interconnection charges. These attempts are made by bypass operators that reroute a part of the traffic of calling parties within the network of another operator to the network of the receiving operator without going through the interconnection facility. Generally these bypass operators make use of end user facilities from the receiving operator, i.e. subscriptions represented by Subscriber Identity Module (SIM) cards, that are exploited to inject off-net calls as on-net calls in the receiving operator's network. In other cases, end user facilities of another operator, different from the receiving operator, may be used, e.g. in case such calls cost less than the normally applicable interconnection charges.

Interconnect bypass leads to a direct loss of revenue for the receiving network operator. In addition, interconnect bypass leads to technical problems. Indeed, the bypass operator uses end user facilities to provide a network interconnection. The use of these end user facilities involves the setup of a new call and the creation of an additional interface. As a consequence, there is a serious risk for quality problems such as degraded quality of audio or data transmissions, interruptions during the call, prolonged waiting time during the call initiation, unacceptable delays in the audio or data transmissions, etc. Furthermore, because a bypass operator reroutes an off-net call by setting up a new on-net call making use of end user facilities in the receiving operator's network, the Calling Line Identification (CLI) of the calling party in the off-net call will be replaced with the CLI of the misused end user facility in the signalling of the new on-net call. This leads to inconveniences for the receiving party which receives an erroneous CLI as a result of which services like caller recognition fail, and can also have more serious consequences for safety when for instance a call is made to emergency services, police services or other services that may use the CLI for identity or location tracking purposes. Furthermore, interconnect bypass also creates serious technical difficulties for automated telephone switchboards that operate on the basis of the CLI of the incoming call.

Consequently, there is a demand from network operators for adequate systems or solutions to identify end user facilities like SIM cards that are used by bypass operators in order to enable the operator to promptly stop the use of such end user facilities.

A first type of solutions to detect the presence of an interconnect bypass is implemented in a so called Fraud Management System (FMS). An FMS collects and analyzes the Call Detail Records (CDRs) received from a network operator and/or call signalling in order to detect subscriptions with suspicious behaviour that is typical for an interconnect bypass. Suspicious behaviour, i.e. call characteristics that may indicate interconnect bypass activity like for instance the absence of incoming calls, an abnormally high rate of outgoing phone calls, absence of messaging like ingoing/outgoing SMS messages, a high call diversity, i.e. a high ratio between the number of different destinations called versus the total number of destinations called, e.g. higher than 80 %, etc., is reported by the FMS to enable the operator to deactivate one or more subscriptions that are suspected of being used by a bypass operator. Such an FMS is for instance described in United States Patent Application US 2009/0069047 entitled "Methods, Systems, and Computer Program Products for Detecting Wireless Bypass in a Communications Network".

FMS requires a high number of events in order to obtain statistically relevant measures as a consequence of which its bypass detection latency is rather high.

Also United States Patent Application US 2006/0045248 entitled "Method of Telecommunications Call Record Correlation Providing a Basis for Quantitative Analysis of Telecommunications Call Traffic Routing" describes a system that relies on CDRs of real subscriber calls, i.e. real calls from a real subscriber to a real subscriber the origin, route and timing of which cannot be controlled. The system of US 2006/0045248 correlates the CDRs of random calls in order to identify matching CDRs, i.e. tuples of corresponding originating and terminating CDRs. See paragraphs [0101]-[0111] of US 2006/0045248. Thereafter, as described in paragraph [0112], the system compares the calling line identifiers (CLIs) in the matching CDRs in order to detect interconnect bypass.

The technique known from US 2006/0045248 is limited because its starting point is a random set of real subscriber calls, the origin, route and timing of which cannot be controlled. If the set does not contain calls from Turkmenistan, it will be impossible to detect an interconnect bypass on routes from Turkmenistan. It might even be impossible to know the true origin of a call in the system known from US 2006/0045248.

A second type of solutions to detect the presence of an interconnect bypass relies on Test Call Generation or TCG. A test call platform comprises probes or robots in communications networks of plural operators, schedules and executes test calls between these probes, and analyzes the received CLI in the tests calls in order to detect bypass operations. TCG brings the advantage of a controlled environment: test calls are made from a certain origin at a certain time on purpose to detect bypass fraud preferably on suspicious routes. Such test call platform is for instance described in the European patent application EP 2671372 A1 entitled "A System for Detection of a Bypass of an Interconnect to a Telecommunication Network". In order to detect a bypass of an interconnect to a telecommunication network, such TCG platform schedules and executes a test call to the telecommunication network from outside the telecommunication network, more precisely to a receiver probe with a subscription for terminating the test call. The TCG system hence comprises a control system configured to initiate such test call from a certain origin, for instance a sender probe, to receive from the receiver probe call information comprising a received CLI of the test call, and to analyse the received CLI such that presence of the bypass can be detected. Such TCG system does not require an interface with the CDR database of an operator as it obtains the received CLI of the test call from the receiver probe.

One problem with these systems that make use of test calls is that they are exposed to the risk of counter-detection due to the specific behaviour of the calling pattern of the test calls, and the volume of test calls. To avoid connection costs, the test calls are normally not picked up. Typically, the test calls are also performed according to a fixed pattern of start time, ringing duration, etc., which may cause suspicion with a bypass operator. Another problem is that the subscriptions used to originate test calls and the subscriptions that terminate test calls may originate or terminate a large number of calls, such volume being also suspicious. This creates the risk that the bypass operators can detect and identify the subscriptions used for originating the test calls and/or the subscriptions used for receiving the test calls. The bypass operator can then subsequently blacklist these subscriptions in order to avoid bypass activity on test calls and as a consequence thereof avoid being detected. In order to be effective against such anti-detection measures taken by bypass operators, parts of the system for making test calls, such as for example the receiver probe or the means for originating test calls or the subscriptions or virtual numbers used to receive the test calls, could be reconfigured extensively, for example by providing them with new subscriptions for receiving or generating test calls. This however is a slow process, which casts money and may require physical intervention such as for example replacing a SIM card.

In order to mitigate the risk for counter-detection of test calls by bypass operators, European Patent Application EP 2 509 294 A1 entitled "A Telecommunication network bypass Detection System with Reduced Counter Detection Risk" describes a TCG platform wherein a large set of virtual numbers is used to terminate test calls at a single receiver probe. Different embodiments are described for constitution of the set of virtual numbers (mix of reused and unused numbers, non-consecutive numbers, numbers of multiple geographical zones or having different prefixes, etc.) and for the order wherein the virtual numbers or subsets of the virtual numbers (rotating, random rotating, etc.) can be used by the receiving probe.

The use of virtual numbers however is not free of problems. Due to internal fraud with the operator(s) of telecommunication network(s), e.g. a malicious employee who is knowledgeable on the list of virtual numbers and who is paid money by a bypass operator to disclose company confidential information, the list of virtual numbers may be disclosed to bypass operators which in this way have another possibility to blacklist the virtual numbers for bypass activity. An evident measure to complicate such internal fraud resides in regular replacement of the virtual numbers, e.g. monthly replacement of all virtual numbers by a new set of virtual numbers, but this requires discipline with the network operators that monthly have to allocate and configure for instance 500 numbers in case 5 test SIMs are each assigned 100 virtual numbers.

Another disadvantage of virtual numbers is that they will not appear on the white list of bypass operators who may focus bypass activity to only subscriber numbers on such white list generated and maintained by the bypass operator, e.g. a list of real subscribers that have a normal pattern of incoming international calls: for instance real subscriber numbers that regularly receive international traffic of varying duration, including sometimes calls of long duration, etc. Numbers used for test calls normally do not appear on such white list because numbers are selected that usually have not been used for some time, and only a minority of subscribers receive regular international calls such that when test numbers are selected randomly, only few of them will be on such white list. Bypass operators who concentrate their bypass activity on such white list consequently will not be detected when test calls are made to numbers used for test calls. Furthermore, it is difficult to make test numbers appear on such white list because bypass operators may look at a long history and it is expensive to establish a normal international traffic pattern.

It is worth noticing that a TCG platform further runs the risk that an inadvertent call made by a legitimate subscriber to one of the probes at a point in time whereon a test call is expected to arrive at this probe, i.e. a so called interfering call, will be considered to originate from an interconnect bypass as a result of which the legitimate subscription will be deactivated.

False positive bypass detections also occur in traditional FMS platforms since bypass operators implement anti-detection measures that artificially adapt their call behaviour to make it resemble normal subscribers behaviour.

International Patent Application WO 2012/003514 entitled "Advanced Predictive Intelligence for Terminating Bypass Detection and Prevention" or its equivalent United States Patent Application US 2012/0021720 A1 describes a TCG system wherein test calls are made to real subscriber numbers, thus avoiding the use of numbers or virtual numbers that are temporarily exclusively allocated to a receiving test probe and that are vulnerable to detection by bypass operators. WO 2012/003514 foresees a so called PI Gateway that facilitates forwarding the test call destined to a real subscriber number to a local number controlled by the PI Gateway such that the received CLI can be analysed. Operation of the PI gateway is described from page 14, line 28 to page 17, line 4 in WO 2012/003514. The system known from WO 2012/003514 hence relies on a dedicated gateway, the PI gateway, where the signalling (e.g. SS7 signalling) is routed to such that the PI gateway can manage only the test call for forward to the local number whereas all other calls different from the test call are allowed to be terminated as usual at the real subscriber number.

The PI gateway from WO 2012/003514 is an additional piece of hardware that must be installed in the signalling path of the telecommunication network. Such PI gateway is complex to install and configure, and constitutes an additional point of failure in the operators network that must be trusted by the operator.

### Summary of the Invention

The present invention is defined by the appended independent claims. Dependent claims constitute embodiments of the invention. Although the invention is only defined by the claims, the embodiments and features described in this specification that do not fall within the scope of the independent claims, if any, are to be interpreted as examples useful for understanding various embodiments of the invention.

It is an objective of the present invention to disclose an improved method and system for detection of interconnect bypass using test calls wherein the drawbacks of existing solutions addressed above are resolved or mitigated. More particularly, it is an objective to disclose a TCG method and system with reduced risk for black- and/or white-listing by bypass operators but which does not require the installation and configuration of a gateway or alternate equipment in the signalling path of a telecommunication network. It is a further objective to increase the effectiveness of test call based bypass detection, i.e. to increase the detection rate of bypass activity, also in case the bypass activity is concentrated on a white list of numbers maintained by the bypass operator. It is a further objective to maintain a high detection rate over a longer period of weeks or even months without substantial manual interventions such as the regular replacement of large sets of virtual numbers used by test call receiving probes.

According to the present invention, the above mentioned objectives are realized by a method for detection of a bypass of an interconnect to a telecommunication network of an operator of a real subscriber, as defined by claim 1, the method comprising:
- generating a test call to or through a real subscriber number of a real subscriber active in the telecommunication network;
- obtaining call data including received calling line identifiers and time information for calls terminating to the real subscriber number from the operator of the real subscriber;
- extracting a received calling line identifier for the test call from the call data comprising matching the time information received from the operator with timing of the test call; and
- detecting presence of a bypass by analysis of the received calling line identifier, by verifying if the received calling line identifier belongs to the numbering plan of the telecommunication network wherein the test call is received, or by verifying the country code, or by establishing that the received calling line identifier does not correspond to the calling line identifier of an origin of the test call.

Thus, the bypass detection method according to the invention relies on test calls to numbers of real subscriber, in the context of the present invention called "real subscriber numbers". These numbers may be randomly selected or may be selected more intelligently from a list of real subscriber numbers obtained from the operator. Anyhow, the test calls to such real subscriber numbers are difficult to detect by bypass operators that implement counter-detection measures because the real subscriber number that is used for a test call will typically not be blacklisted: the real subscriber number receives an occasional single test call and may then even be excluded for test calls for some time. Even if it would be blacklisted as a result of a detected test call, such counter-detection measure would be ineffective because the amount of real subscriber numbers that can be used for test calls is huge and so is the number of potential test routes: the system according to the present invention is no longer dependent on a limited list of virtual numbers or a list that may be leaked to the bypass operator as a result of which the bypass operator can avoid bypass activity on routes to these virtual numbers and remain undetected. Further, the real subscriber numbers used for test calls will appear on white lists of bypass operators. In particular if the real subscriber numbers are intelligently chosen - e.g. real subscribers that frequently receive international calls - the probability that the real subscriber numbers used for test calls also appear on the white list that a bypass operator is managing for his bypass activity, is high. The use of test calls by the method according to the present invention further brings the advantage that control is kept over the origin of the test calls, as a result of which the CLI or portions of the CLI that must be received by the receiving test probe are known, and control is kept over the timing of the test calls. The latter is important as the method according to the invention further must obtain the received calling line identifier for the test call. This received calling line identifier is obtained from the operator of the real subscriber number that receives the test call in situations where the operator is prepared to share certain call data including received calling line identifiers. Knowledge of the timing of the test call is then required to identify the CLI in the call data received from the operator. The signalling of calls to the real subscriber number is not re-routed and/or monitored and/or intercepted during the time interval of the test. Consequently, no gateway needs to be installed in the signalling path of the telecommunication network.

In embodiments of the method for detection of a bypass of an interconnect to a telecommunication network according to the present invention defined by claim 2, the call data are obtained from the operator of the real subscriber.

In order to be able to determine if bypass activity took place on the test call to a real subscriber number, the received calling line identifier is analysed in the method according to the present invention. One way to obtain this received calling line identifier relies on information received from the operator of the real subscriber that is called in the test call. This can be the operator of the network where the real subscriber is called, i.e. the home network operator, or it can be the visited network operator of the real subscriber in case the real subscriber is roaming in a visited network at the time the test call is made.

In an embodiment of the method for detection of a bypass of an interconnect to a telecommunication network according to the present invention, defined by claim 3,
the call data comprise Call Data Records; and
detecting presence of a bypass comprises:
   - CDR matching in order to determine a CDR matching with the test call;
   - using a calling line identifier in the CDR matching with the test call to identify the bypass.

Indeed, the operator of the real subscriber that receives the test call may provide access to the Call Data Records or CDRs that are automatically generated for all calls, e.g. for billing purposes. The CDRs corresponding to the calls terminating to the real subscriber number, commonly called the Terminating CDR, contain the received calling line identifier or CLI, usually in a field named "calling party", "A party", "originating party" or "last forwarding party", and in case of a signalling monitoring CDR could also include extensive time information such as IAM time, ANM time, REL time or similar in other signalling techniques (e.g. SIP). In such CDR the real subscriber number would usually be in a field named "called party", "B party", "terminating party", or in case the real subscriber would have a forward state in a field "forwarding party". The time information can be used to determine which CDR is matching with the test call. In addition, matching with the called party number, event type, etc., to determine the relevant CDR. A CDR matching algorithm that enables to determine which CDR is matching with the test call may for instance operate according to the principles described in paragraphs [079]-[080] or [0101]-[0111] of US 2006/0045248A1 for real subscriber calls. Once the CDR matching with the test call has been determined, analysis of the CLI in the CDR enables to identify bypass operation: if the CLI belongs to the numbering plan of the network wherein the test call is received whereas the test call is made from outside this network, if the CLI does not correspond to the CLI of the origin of the test call, ..., arbitrage or bypass took place. The CLI analysis to determine bypass hence may for instance comprise verifying if the calling line identification belongs to the numbering plan of the network where the test call is received, verifying the country code, or alternate CLI analysis as for instance described in international patent application WO 2012/104283. In case of bypass in the test call, the test call could also be matched by the same methodology with the CDRs generated by the bypass number, i.e. an Originating CDR in this case. The real subscriber number will then correspond with the "called party" in such CDR and the received CLI will correspond to the "calling party" in such CDR. Usually, networks only generate CDRs for effective calls, i.e. calls that are answered. Thus, when relying on CDR data only, the test calls that the real subscribers have answered will be useful for the matching process and bypass detection. Networks could however also be configured to generate CDRs for call attempts in which case the method will be more efficient. Moreover, when call attempts also generate CDRs it becomes possible to avoid or reduce call costs as it would be sufficient to let a test call ring once or a couple of times to obtain a CDR with CLI that can be analysed, such that on average less test calls will be answered and generate costs.

As further specified in claim 4, the Call Data Records received from the operator of the real subscriber that receives the test call in the method for detection of a bypass of an interconnect to a telecommunication network according to the present invention, comprise one or more of:
- CDRs automatically generated by the operator for billing purposes; or
- CDRs of call attempts generated for not connected calls by the operator; or
- CDRs made accessible by the operator for profiling purposes; or
- CDRs or similar records generated by signalling monitoring systems.

Thus, in addition to or as an alternative to the CDRs that are automatically generated by the operator for connected calls and that are used for billing purposes, the operator may also generate CDRs for not connected calls or so called call attempts. If this is the case, the method according to the present invention can be applied for not connected test calls as a result of which connection costs can be avoided and the bypass detection method according to the present invention can be performed with reduced costs. It is also possible that the operator of the real subscriber that receives the test call already provides access to his CDRs for different purposes, e.g. profiling as is done in FMS systems. In such case, no additional interface is required to obtain CDRs from operator to perform the CDR matching with the test call as required in the method under the present invention.

Further optionally, as defined by claim 7, embodiments of the method for detection of a bypass of an interconnect to a telecommunication network according to the present invention further comprise:
- selecting the real subscriber number of the real subscriber from an intelligent list of real subscribers received from the operator of the telecommunication network.

Following another optional aspect of the method for detection of a bypass of an interconnect to a telecommunication network according to the present invention, defined by claim 6, the intelligent list comprises one or more of:
- subscriber numbers of real subscribers of the telecommunication network that in recent past received an amount of international calls exceeding a certain threshold;
- recycled subscriber numbers of real subscribers of the telecommunication network that recently unsubscribed from the telecommunication network;
- subscriber numbers that form part of a new range of yet unused real subscriber numbers of the telecommunication network;
- subscriber numbers of real subscribers of the telecommunication network that were never before configured in call forward mode.

Real subscribers that recently made international calls have a higher chance to appear on white lists where bypass operators concentrate their activity on. Consequently, using such real subscribers that recently received international calls for test calls increases the probability that bypass activity will be detected via the test calls.

Real subscribers that recently unsubscribed can be used for test calls without service interruption for the subscriber who no longer uses this number. Such real subscriber numbers may still appear on white lists of bypass operators so the fact they recently unsubscribed does not affect the chances that bypass activity will take place on routes thereto.

Real subscriber numbers that form part of a new range of numbers and/or that are not yet assigned to subscribers and therefore yet unused, can be used for test calls without service interruption for any subscriber. Such new subscriber numbers will not yet appear on black lists of bypass operators so the chances that bypass activity will take place on routes thereto are unaffected.

Real subscriber numbers that were never before configured in call forward mode have the advantage that test efficiency is maximised as it may not be desirable to use real subscriber numbers that are in forward mode as this would require to retrieve and restore the original forward situation.

In embodiments of the method for detection of a bypass of an interconnect to a telecommunication network according to the present invention, defined by claim 7, certain high profile real subscribers of the telecommunication network have been removed from the intelligent list.

Indeed, although high profile subscribers such as a president, ministers, senators, major corporate clients, etc. may frequently receive international calls and therefore appear on white lists of bypass operators, one may wish to avoid temporarily interrupting the service for such high profile subscribers and therefore exclude them from the list of real subscriber numbers that is used for test calls.

The method for detection of a bypass of an interconnect to a telecommunication network according to the present invention, as defined by claim 8 further optionally comprises:
- sending a message to the real subscriber number to inform the real subscriber that his number will temporarily be out of service for a test.

This way, the real subscriber whose number is temporarily used for bypass detection based on test calls is made aware thereof. The real subscriber consequently knows that his number will be temporarily non-reachable.

The real subscriber may be consulted before his number is used for bypass detection and the real subscriber may be given the chance to approve or disapprove interrupting his service temporarily and using his number for a test call. Such consultation could be done by UUSD or SMS and could originate from the same subscription that also initiates the setting of the call forward mode.

To motivate the real subscriber to approve using his number for bypass detection or to compensate him/her, the subscriber may be given some reward after the test is completed. The reward may be a "thank you" message informing the subscriber that the test is over and his service is restored, or it may be a financial reward, e.g. a coupon, call credit, a rebate on his invoice, etc.

In addition to a method as defined by claim 1, the present invention also relates to a system for detection of a bypass of an interconnect to a telecommunication network of an operator of a real subscriber, defined by claim 9, the system comprising:
- means adapted to originate a test call to or through a real subscriber number of a real subscriber of the telecommunication network; and
- a control system configured to:
   - control initiation of the test call to or through the real subscriber number;
   - receive call data including received calling line identifiers and time information for calls terminating to the real subscriber number from the operator of the real subscriber number;
   - extract a received calling line identifier for the test call from the call data comprising matching the time information received from the operator with timing of the test call; and
   - detect presence of a bypass by analysis of the received calling line identifier, by verifying if the received calling line identifier belongs to the numbering plan of the telecommunication network wherein the test call is received, or by verifying the country code, or by establishing that the received calling line identifier does not correspond to the calling line identifier of an origin of the test call.

### Brief Description of the Drawings

Fig. 1 illustrates a first embodiment of the method and system for bypass detection according to the present invention;
Fig. 2 illustrates a second embodiment of the method and system for bypass detection according to the present invention;
Fig. 3 illustrates a third embodiment of the method and system for bypass detection according to the present invention;
Fig. 4 illustrates a fourth embodiment of the method and system for bypass detection according to the present invention;
Fig. 5 illustrates a fifth embodiment of the method and system for bypass detection according to the present invention;
Fig. 6 illustrates a sixth embodiment of the method and system for bypass detection according to the present invention;
Fig. 7 illustrates a seventh embodiment of the method and system for bypass detection according to the present invention;
Fig. 8 illustrates an eight embodiment of the method and system for bypass detection according to the present invention; and
Fig. 9 illustrates a computing system suitable for hosting the system for bypass detection according to the present invention and suitable for implementing the method for bypass detection according to the present invention.

### Detailed Description of Embodiment(s)

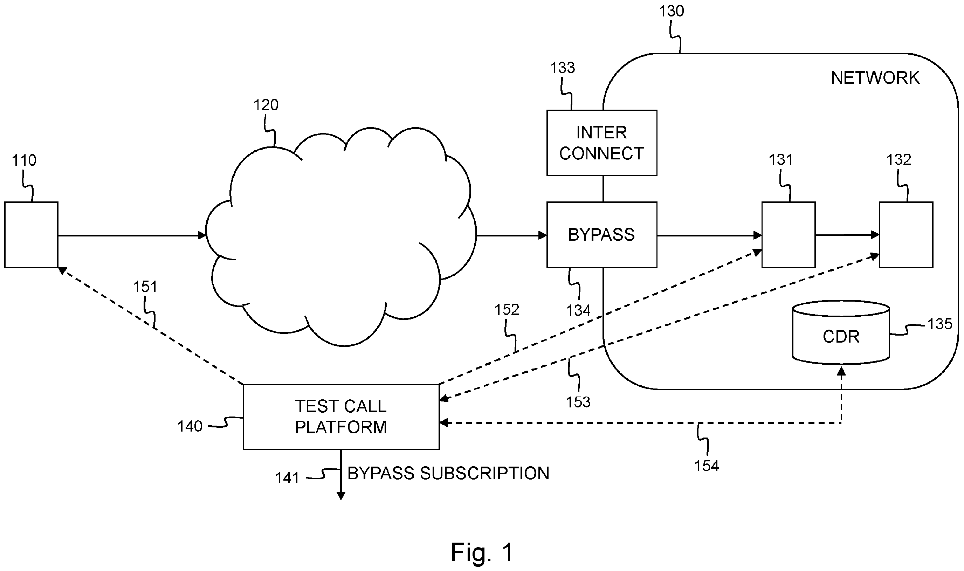

Fig. 1 shows a first embodiment of a system 140 for detection of a bypass 134 of an interconnect 133 to a telecommunication network 130 that operates according to the present invention. The system 140 is a test call platform or TCG system that schedules tests calls and instructs test probes to originate such test calls at specific time instances. In Fig. 1, test call platform 140 sends instructions 151 to test probe 110 to generate a test call at a specified time to a number of a real subscriber 131, the so called real subscription number of a real subscriber that is active in network 130 at the point in time the test call is made. The off-net test call originating from test probe 110, e.g. an end-user facility 110 in a network different from the telecommunication network 130, e.g. a smartphone equipped with a SIM card making a call to a number of a real subscriber 131 in telecommunication network 130, i.e. its home network or a visited network, is supposed to pass through the interconnect facility 133 between the network where test probe 110 is located and network 130 or between any intermediate operator's network 120 and network 130. The bypass 134 however may intercept the call from test probe 110 to the number of the real subscriber 131, setup an on-net call from the bypass 134 to the real subscription 131 in the network 130.

After the test call is made, the test call platform 140 consults the Call Data Record database or CDR database 135 of the network 130 in order to extract from the CDR stored for the test call the Calling Line Identifier or CLI received by the real subscription 131. This is indicated by 154 in Fig. 1. Thereupon, the CLI is analysed using known techniques to determine bypass from CLI analysis. If it belongs for instance to the numbering plan of network 130, test call platform 140 shall identify the subscription corresponding to that CLI as a bypass subscription 141 of bypass 134. The test call platform 140 reports such bypass subscription 141 to the operator of network 130 in order to enable the operator to deactivate such subscription.

Supplementary, the test call platform 140 may configure the real subscription 131 temporarily in call forward mode, as is indicated by 152 in Fig. 1. As a result, all calls to real subscription 131 will be forwarded to a test probe 132 in network 130 that is controlled by the test call platform. When the time interval is kept short and no interfering calls arrive at the real subscription 131, only the test call from test probe 110 to real subscription 131 is forwarded to test probe 132. Test probe 132 thereupon can be consulted by test call platform 140 such that test call platform 140 obtains the CLI received by test probe 132. This is indicated by 153 in Fig. 1. Again, the test call platform 140 can analyse the CLI, e.g. compare it with the numbering plan of the network 130 or country wherein the network 130 is located, to detect that the received CLI belongs to a bypass 134. If this is the case, the bypass subscription 141 is reported to the operator of network 130 to enable the operator to take this bypass subscription 141 out of operation.

It is thus noticed, that the test call platform 140 may combine consulting the CDR database 135 with call forwarding from the real subscription 131 that is addressed on the test call to a test probe 132 under control of the test call platform 140.

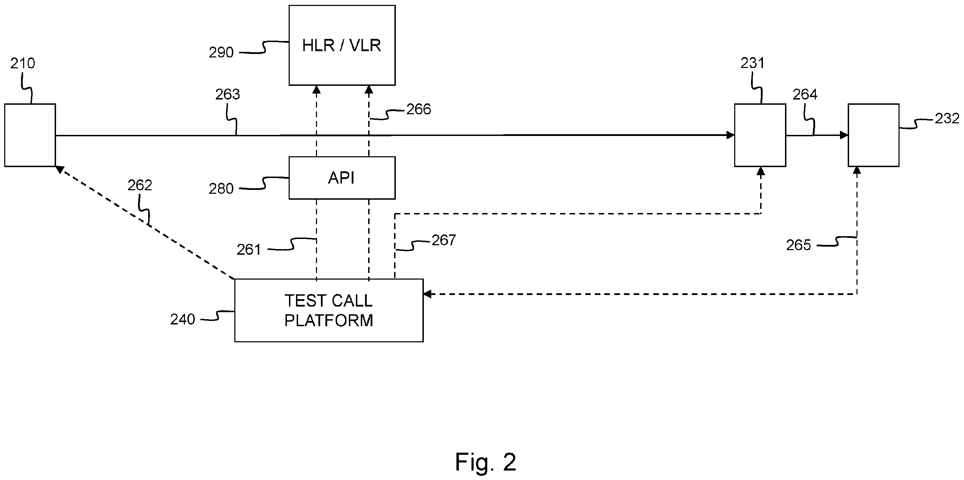

Fig. 2 illustrates an implementation of the system according to the invention wherein the test call platform 240 makes use of an application programming interface or API 280 to temporarily set call forwarding, for instance unconditional call forwarding, for real subscription 231 in the Home Location Register or HLR 290 of the operator of the real subscription 231. Via the API 280, the test call platform 240 sends instructions 261 to HLR 290 to activate unconditional call forward for real subscription 231 to the test probe 232. Thereafter, the test call platform 240 sends instructions 262 to probe 210 to initiate a test call 263 to real subscription 231. As a result of the call forward mode, the test call 263 will be forwarded to test probe 232. This is indicated by 264 in Fig. 2. The call forward preferably will be an unconditional call forward to reduce the time needed to perform the test call. After the test call 263, 264, the test probe 232 will report the received CLI to the test call platform 240, as indicated by 265, and the test call platform 240 will analyse the CLI to detect bypass activity. The test call platform 240 sends instructions 266 to HLR 290 to deactivate the call forwarding as soon as the test call is performed, and sends a message 267 to the real subscription 231 to inform the subscription that its number is again reachable, and eventually reward the subscriber of that real subscription 231 with some credit.

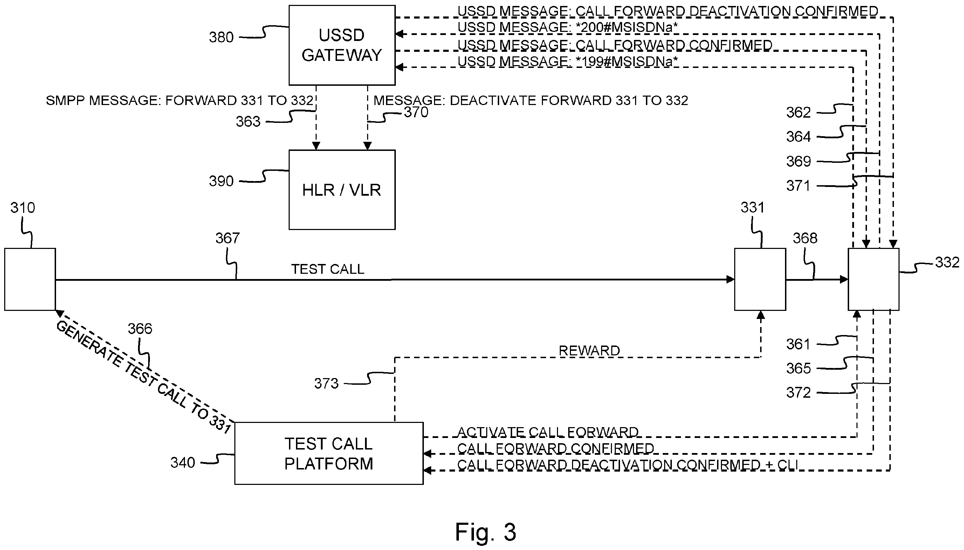

Fig. 3 illustrates a variant implementation of the method and system for bypass detection of the present invention involving a USSD gateway 380 to temporarily activate call forwarding for the real subscription 331 that is used for the test call. The test call platform 340 thereto sends instructions 361 to test probe 332 to activate call forwarding for real subscription 331. Upon receipt of these instructions 361, a first USSD message 362 is sent to USSD gateway 380. This first USSD message 362 contains a first specific USSD code, e.g. "*199#*", as well as an identification of the real subscription 331 that must be configured in call forward mode to the test probe 332. The entire USSD message 362 sent by the test probe 332 to the USSD gateway 380 hence looks as follows:
*199#MSISDNa*
Herein:
   *199#* represents the specific USSD code that enables a third party, in this case the test probe 332, to request call forward to itself; and
   MSISDNa represents the identification of the real subscription 331 whose number will temporarily be forwarded to the test probe 332 sending the USSD message.
The USSD message 362 may also contain an explicit mentioning of the subscription 332 sending the USSD message. In variant implementations where the USSD message 362 is sent from a different subscription that is controlled by the test call platform 340, the USSD message 362 shall contain an identification of the test probe subscription 332 whereto the real subscription 331 must be forwarded.

The USSD gateway 380 is a device present in the GSM network of the home network operator or visited network operator of subscription 331, able to receive and interpret USSD messages and able to connect with the Home Location Register or Visited Location Register HLR / VLR 390 of the home network operator or visited network operator of subscription 331. The USSD gateway 380 contains logic able to interpret the specific USSD code *199#*, and able to generate instructions 363 for the HLR / VLR 390 to configure call forward for the real subscriber 331 to the test probe 332 upon receipt of the specific USSD code *199#*. The USSD gateway thereto e.g. uses the SMPP protocol. Once this is done, the USSD gateway 380 sends a confirmation message 364 to the test probe 332, i.e. another USSD message confirming that the call forwarding from real subscription 331 to test probe 332 is configured. Thereupon, the test probe 332 informs the controller 340 that schedules and monitors the test calls that the requested call forward is implemented via confirmation message 365.

The test call platform 340 thereafter sends instructions 366 to test probe 310 to generate a test call 367 to real subscription 331. As a result of the call forward mode, the test call 367 will be forwarded to the test probe 332 as is indicated by 368 in Fig. 3.

As soon as the test call has taken place, the test probe 332 sends a second USSD message 369 to instruct the USSD gateway 380 to deactivate the call forward for the real subscription 331 whose number was used in the test call 367. This second USSD message 369 sent by test probe 332 contains a second specific USSD code, e.g. "*200#*", as well as an identification of the real subscription 331 whose call forward to the test probe 332 must be deactivated. The entire second USSD message 369 sent by the test probe 332 to the USSD gateway 380 may look as follows:
*200#MSISDNa*
Herein, *200#* represents the second specific USSD code that enables a third party, in this case the test probe 332, to request deactivation of call forward to itself. The USSD gateway 380 is able to interpret this second USSD message 369 and to activate logic that commands the HLR / VLR 390 via another message 370, to deactivate the call forwarding for the real subscription 331.

USSD gateway 380 thereupon sends a confirmation message 371 to test probe 332, e.g. another USSD message, to inform the test probe 332 that the call forwarding has been deactivated. Upon receipt of this confirmation 371, the test probe sends a confirmation 372 to the test call platform 340 informing the test call platform that the call forwarding for real subscription 331 has been deactivated. This confirmation message may contain the CLI received by test probe 332 in the test call 368 or a separate communication between test probe 332 and test call platform 340 may convey this CLI. Test call platform 340 shall analyse the CLI to detect bypass activity during the test call. Test call platform 340 can also inform the real subscription 331, e.g. via an SMS message 373, that its number is again reachable. The SMS message 373 may eventually contain information on a reward or compensation for the subscriber of real subscription 331.

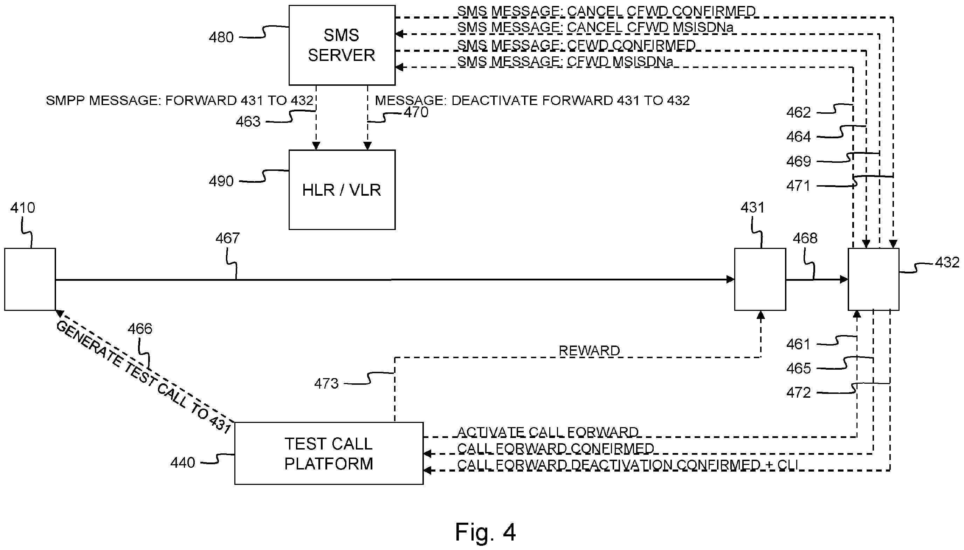

Fig. 4 illustrates a variant implementation of the method and system for bypass detection of the present invention involving a Short Message Service server or SMS server 480 to temporarily activate call forwarding for the real subscription 431 that is used for the test call. The test call platform 440 thereto sends instructions 461 to test probe 432 to activate call forwarding for real subscription 431. Upon receipt of these instructions 461, a first SMS message 462 is sent to SMS server 480. This first SMS message 462 contains a first specific code, e.g. "CFWD<SPACE>", as well as an identification of the real subscription 431 that must be configured in call forward mode to the test probe 432. The entire SMS message 462 sent by the test probe 432 to the SMS server 480 hence looks as follows:
CFWD MSISDNa
Herein:
CFWD represents the specific code that enables a third party, in this case the test probe 432, to request call forward to itself; and
MSISDNa represents the identification of the real subscription 431 whose number will temporarily be forwarded to the test probe 432 sending the SMS message 462.

It is noticed that the SMS message 462 may also contain an explicit mentioning of the subscription 432 sending the SMS message, although the SMS server 480 is able to determine the subscription number used by test probe 432 to send the SMS 462. In variant implementations where the SMS message 462 is sent from a different subscription that is controlled by the test call platform 440, the SMS message 462 shall contain an identification of the test probe subscription 432 whereto the real subscription 431 must be forwarded.

The SMS server 480 is a device present in the GSM network of the home network operator or visited network operator of subscription 431, able to receive and interpret SMS messages and able to connect with the Home Location Register or Visited Location Register HLR / VLR 490 of the home network operator or visited network operator of subscription 431. The SMS server 480 contains logic able to interpret the specific code "CFWD", and able to generate instructions 463 for the HLR / VLR 490 to configure call forward for the real subscriber 431 to the test probe 432 upon receipt of the specific code "CFWD". The SMS server 480 thereto e.g. uses the SMPP protocol. Once this is done, the SMS server 480 sends a confirmation message 464 to the test probe 432, i.e. another SMS message confirming that the call forwarding from real subscription 431 to test probe 432 is configured, for instance an SMS with content "CFWD CONFIRMED". Thereupon, the test probe 432 informs the controller 440 that schedules and monitors the test calls that the requested call forward is implemented via confirmation message 465.

The test call platform 440 thereafter sends instructions 466 to test probe 410 to generate a test call 467 to real subscription 431. As a result of the call forward mode, the test call 467 will be forwarded to the test probe 432 as is indicated by 468 in Fig. 3.

As soon as the test call has taken place, the test probe 432 sends a second SMS message 469 to instruct the SMS server 480 to deactivate the call forward for the real subscription 431 whose number was used in the test call 467. This second SMS message 469 sent by test probe 432 contains a second specific code, e.g. "CANCEL CFWD<SPACE>", as well as an identification of the real subscription 431 whose call forward to the test probe 432 must be deactivated. The entire second SMS message 469 sent by the test probe 432 to the SMS server 480 may look as follows:
CANCEL CFWD MSISDNa
Herein, CANCEL CFWD represents the second specific code that enables a third party, in this case the test probe 432, to request deactivation of call forward to itself. The SMS server 480 is able to interpret this second SMS message 469 and to activate logic that commands the HLR / VLR 490 via another message 470, to deactivate the call forwarding for the real subscription 431.

SMS server 480 thereupon sends a confirmation message 471 to test probe 432, e.g. another SMS message with content "CANCEL CFWD CONFIRMED", to inform the test probe 432 that the call forwarding has been deactivated. Upon receipt of this confirmation 471, the test probe sends a confirmation 472 to the test call platform 440 informing the test call platform that the call forwarding for real subscription 431 has been deactivated. This confirmation message may contain the CLI received by test probe 432 in the test call 468 or a separate communication between test probe 432 and test call platform 440 may convey this CLI. Test call platform 440 shall analyse the CLI to detect bypass activity during the test call. Test call platform 440 can also inform the real subscription 431, e.g. via another SMS message 473, that its number is again reachable. The SMS message 473 may eventually contain information on a reward or compensation for the subscriber of real subscription 431.

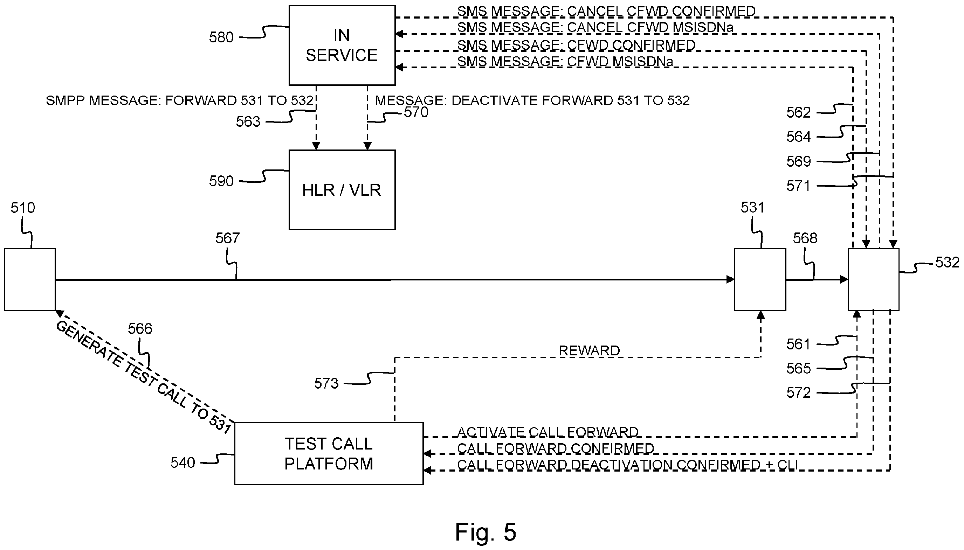

Fig. 5 illustrates a variant implementation of the method and system for bypass detection of the present invention involving an Intelligent Network Service or IN Service 580 to temporarily activate call forwarding for the real subscription 531 that is used for the test call and that is supposed to be a prepaid subscription. The test call platform 540 sends instructions 561 to test probe 532 to activate call forwarding for prepaid real subscription 531. Upon receipt of these instructions 561, a first SMS message 562 is sent to IN service 580. This first SMS message 562 contains a first specific code, e.g. "CFWD<SPACE>", as well as an identification of the prepaid real subscription 531 that must be configured in call forward mode to the test probe 532. It is noticed that as an alternative to SMS, the communication between test probe 532 and IN service 580 could rely on USSD messages or operate via an API. The entire SMS message 562 sent by the test probe 532 to the IN service 580 hence looks as follows:
CFWD MSISDNa
Herein:
CFWD represents the specific code that enables a third party, in this case the test probe 532, to request call forward to itself; and
MSISDNa represents the identification of the prepaid real subscription 531 whose number will temporarily be forwarded to the test probe 532 sending the SMS message 562.

It is noticed that the SMS message 562 may also contain an explicit mentioning of the subscription 532 sending the SMS message, although the IN service 580 is able to determine the subscription number used by test probe 532 to send the SMS 562. In variant implementations where the SMS message 562 is sent from a different subscription that is controlled by the test call platform 540, the SMS message 562 shall contain an identification of the test probe subscription 532 whereto the prepaid real subscription 531 must be forwarded.

The IN server 580 is a device present in the GSM network of the home network operator or visited network operator of subscription 531, able to manage services for prepaid subscriptions like 531 and able to connect with the Home Location Register or Visited Location Register HLR / VLR 590 of the home network operator or visited network operator of subscription 531. The IN service 580 contains logic able to interpret the specific code "CFWD", and able to generate instructions 563 for the HLR / VLR 590 to configure call forward for the prepaid real subscriber 531 to the test probe 532 upon receipt of the specific code "CFWD". The IN service 580 thereto e.g. uses the SMPP protocol. Once this is done, the IN service 580 sends a confirmation message 564 to the test probe 532, e.g. another SMS or USSD message confirming that the call forwarding from real subscription 531 to test probe 532 is configured, for instance an SMS with content "CFWD CONFIRMED". Thereupon, the test probe 532 informs the controller 540 that schedules and monitors the test calls that the requested call forward is implemented via confirmation message 565.

The test call platform 540 thereafter sends instructions 566 to test probe 510 to generate a test call 567 to prepaid real subscription 531. As a result of the call forward mode, the test call 567 will be forwarded to the test probe 532 as is indicated by 568 in Fig. 3.

As soon as the test call has taken place, the test probe 532 sends a second SMS message 569 to instruct the IN service 580 to deactivate the call forward for the prepaid real subscription 531 whose number was used in the test call 567. This second SMS message 569 sent by test probe 532 contains a second specific code, e.g. "CANCEL CFWD<SPACE>", as well as an identification of the prepaid real subscription 531 whose call forward to the test probe 532 must be deactivated. The entire second SMS message 569 sent by the test probe 532 to the IN service 580 may look as follows:
CANCEL CFWD MSISDNa
Herein, CANCEL CFWD represents the second specific code that enables a third party, in this case the test probe 532, to request deactivation of call forward to itself. The IN service 580 is able to interpret this second SMS message 569 and to activate logic that commands the HLR / VLR 590 via another message 570, to deactivate the call forwarding for the prepaid real subscription 531. As already mentioned here above, the communication between test probe 532 and IN service 580 may rely on USSD messaging instead of SMS.

IN service 580 thereupon sends a confirmation message 571 to test probe 532, e.g. another SMS message with content "CANCEL CFWD CONFIRMED", to inform the test probe 532 that the call forwarding has been deactivated. Upon receipt of this confirmation 571, the test probe 532 sends a confirmation 572 to the test call platform 540 informing the test call platform 540 that the call forwarding for prepaid real subscription 531 has been deactivated. This confirmation message 572 may contain the CLI received by test probe 532 in the test call 568 or a separate communication between test probe 532 and test call platform 540 may convey this CLI. Test call platform 540 shall analyse the CLI to detect bypass activity during the test call. Test call platform 540 can also inform the prepaid real subscription 531, e.g. via another SMS message 573, that its number is again reachable. The SMS message 573 may eventually contain information on a reward or compensation for the subscriber of prepaid real subscription 531.

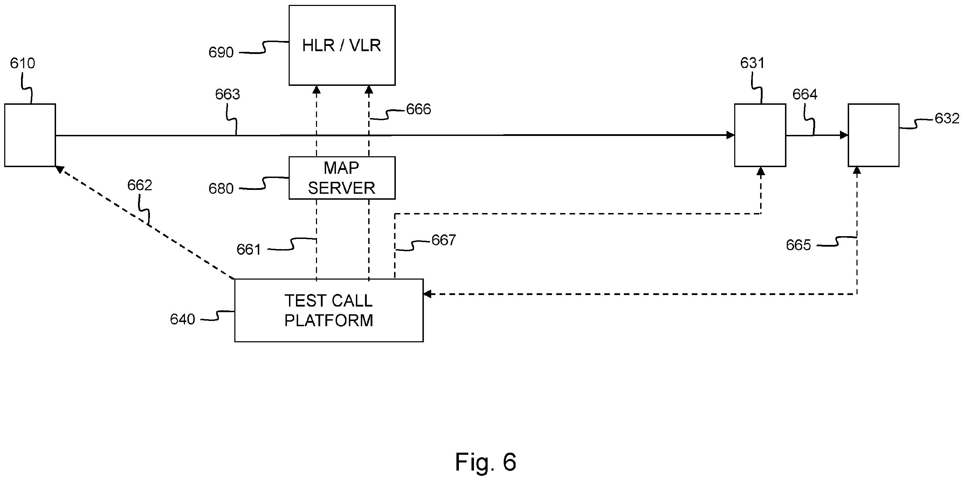

Fig. 6 illustrates an implementation of the system according to the invention wherein the test call platform 640 makes use of a MAP server 680 to temporarily set call forwarding, for instance unconditional call forwarding, for real subscription 631 in the Home Location Register or HLR 690 of the operator of the real subscription 631. Via the MAP server 680, the test call platform 640 sends instructions 661 to HLR 690 to activate unconditional call forward for real subscription 631 to the test probe 632. Thereafter, the test call platform 640 sends instructions 662 to probe 610 to initiate a test call 663 to real subscription 631. As a result of the call forward mode, the test call 663 will be forwarded to test probe 632. This is indicated by 664 in Fig. 6. The call forward preferably will be an unconditional call forward to reduce the time needed to perform the test call. After the test call 663, 664, the test probe 632 will report the received CLI to the test call platform 640, as indicated by 665, and the test call platform 640 will analyse the CLI to detect bypass activity. The test call platform 640 via the MAP server 680 sends instructions 666 to HLR 690 to deactivate the call forwarding as soon as the test call is performed, and sends a message 667 to the real subscription 631 to inform the subscription that its number is again reachable, and eventually reward the subscriber of that real subscription 631 with some credit.

The skilled person will appreciate, that as an alternative to the MAP server, embodiments of the present invention may be contemplated that rely on other signalling servers that are able to connect with the HLR and instruct the HLR to configure call forward on a given subscriber number.

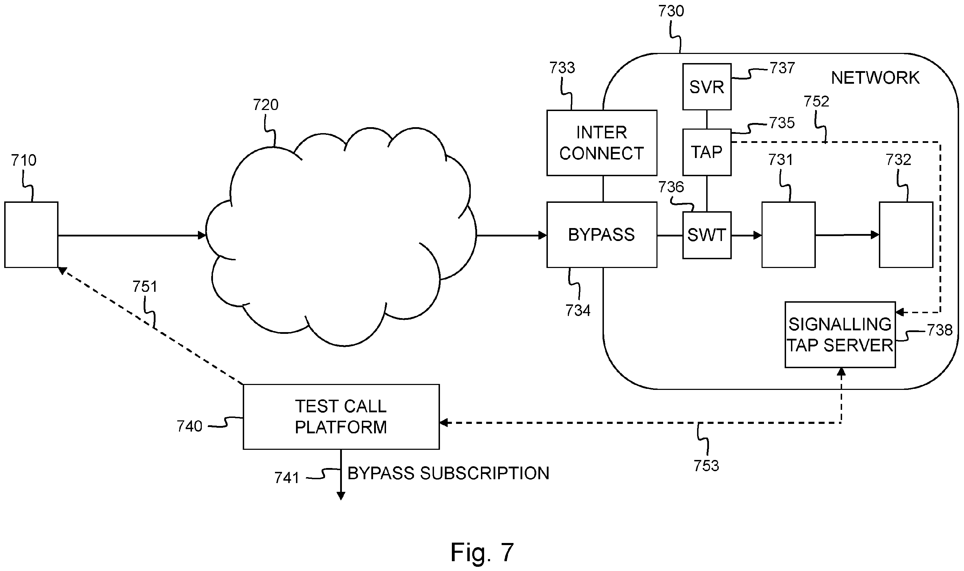

Fig. 7 shows an embodiment of a system 740 for detection of a bypass 734 of an interconnect 733 to a telecommunication network 730 that operates according to the present invention and relies on signalling tapping. The system 740 is a test call platform or TCG system that schedules tests calls and instructs test probes to originate such test calls at specific time instances. In Fig. 7, test call platform 740 sends instructions 751 to test probe 710 to generate a test call at a specified time to a number of a real subscriber 731, the so called real subscription number of a real subscriber that is active in network 730 at the point in time the test call is made. The off-net test call originating from test probe 710, e.g. an end-user facility 710 in a network different from the telecommunication network 730, e.g. a smartphone equipped with a SIM card making a call to a number of a real subscriber 731 in telecommunication network 730, i.e. its home network or a visited network, is supposed to pass through the interconnect facility 733 between the network where test probe 710 is located and network 730 or between any intermediate operator's network 720 and network 730. The bypass 734 however may intercept the call from test probe 710 to the number of the real subscriber 731, setup an on-net call from the bypass 734 to the real subscription 731 in the network 730.

In the network 730, a signalling tap 735 is installed. The signalling tap 735 is a passive tap (or a set of taps) that eavesdrops or sniffs on all signalling between network elements such as switches 736 and signalling servers 737, e.g. IN servers or STP servers. The tapped signalling or relevant portions thereof are stored by the signalling tap 735 in a signalling tap server 738, as is indicated by 752 in Fig. 7. These relevant portions represent call data that can be consulted by the test call platform 740, as indicated by 753 in Fig. 7. The call data stored in signalling tap server 738 shall at least contain the CLI, A party, B party and timestamps, but will in general contain much more information, often similar to CDR data. Hence, the CLI present in the test call from 710 to 731 can be consulted by the test call platform 740 and this CLI is analysed using known techniques to determine bypass from CLI analysis. If it belongs for instance to the numbering plan of network 730, test call platform 740 shall identify the subscription corresponding to that CLI as a bypass subscription 741 of bypass 734. The test call platform 740 reports such bypass subscription 741 to the operator of network 730 in order to enable the operator to deactivate such subscription.

Alternatively, the test call platform 740 may configure the real subscription 731 temporarily in call forward mode to test probe 732. As a result, all calls to real subscription 731 will be forwarded to a test probe 732 in network 730 that is controlled by the test call platform 740. When the time interval is kept short and no interfering calls arrive at the real subscription 731, only the test call from test probe 710 to real subscription 731 is forwarded to test probe 732. Test probe 732 thereupon can be consulted by test call platform 740 such that test call platform 740 obtains the CLI received by test probe 732. Again, the test call platform 740 can analyse the CLI, e.g. compare it with the numbering plan of the network 730 or country wherein the network 730 is located, to detect that the received CLI belongs to a bypass 734. If this is the case, the bypass subscription 741 is reported to the operator of network 730 to enable the operator to take this bypass subscription 741 out of operation.

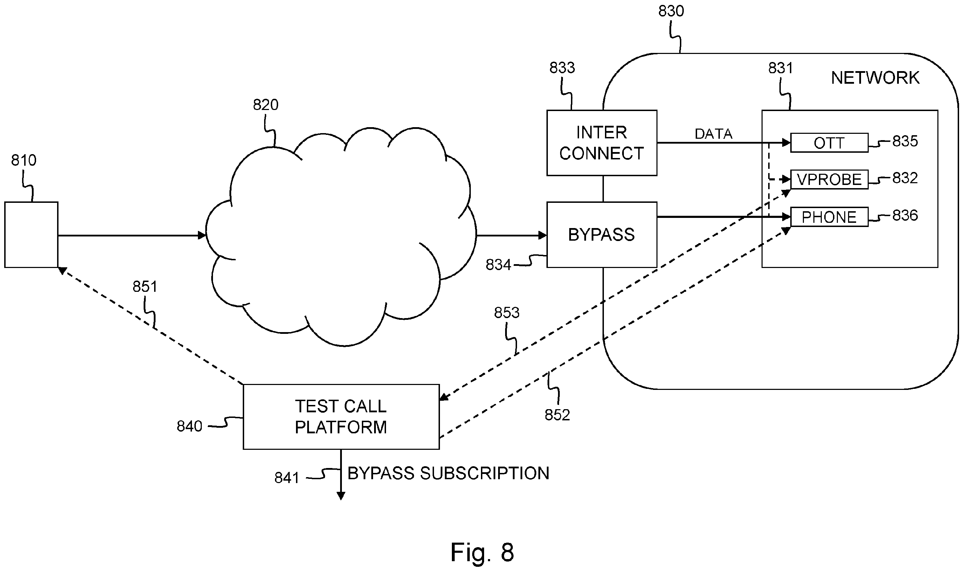

Fig. 8 shows yet another embodiment of a system 840 for detection of a bypass 834 of an interconnect 833 to a telecommunication network 830 that operates according to the present invention. The system 840 is a test call platform or TCG system that schedules tests calls and instructs test probes to originate such test calls at specific time instances. In Fig. 8, test call platform 840 sends instructions 851 to test probe 810 to generate a test call at a specified time to a number of a real subscriber 831, the so called real subscription number of a real subscriber that is active in network 830 at the point in time the test call is made. It is further assumed in Fig. 8 that a virtual test probe 832 has been installed on the real subscriber's appliance. This virtual test probe 832 is a software application that intercepts calls from either the regular mobile network or data network before the calls arrive at the call terminating application, i.e. either the regular phone application 836 or an Over-The-Top application 835, that does not disturb the subscriber upon interception of an incoming call, and that extracts certain information from the incoming call for consultation by the test platform 840. The off-net test call originating from test probe 810, e.g. an end-user facility 810 in a network different from the telecommunication network 830, e.g. a smartphone equipped with a SIM card making a call to the number of real subscriber 831 in telecommunication network 830, i.e. its home network or a visited network, is supposed to pass through the interconnect facility 833 between the network wherein test probe 810 is located and network 830 or between any intermediate operator's network 820 and network 830. The bypass 834 however may intercept the call from test probe 810 to the number of the real subscriber 831, and setup an on-net call from the bypass 834 to the real subscription 831 in the network 830.

The test call platform 840 or the virtual test probe 832 configures the regular call terminating facility 835, 836 to operate temporarily in intercept mode, as is indicated by arrow 852 in Fig. 8. As a result, all calls terminated at the call terminating facility 835, 836 will be intercepted by the virtual test probe 832 installed on the real subscribers' appliance. Virtual test probe 832 can be consulted by test call platform 840 such that test call platform 840 obtains the CLI received by test probe 832. This is indicated by arrow 853 in Fig. 8. Again, the test call platform 840 can analyse the CLI, e.g. compare it with the numbering plan of the network 830 or country wherein the network 830 is located, to detect that the received CLI belongs to a bypass 834. If this is the case, the bypass subscription 841 is reported to the operator of network 830 to enable the operator to take this bypass subscription 841 out of operation.

Although the embodiment with virtual test probe 832 illustrated by Fig. 8 is not restricted thereto, this embodiment is particularly advantageous when an Over-The-Top application, abbreviated OTT application, has been installed on the real subscriber's appliance. An OTT application 835 such as Viber may for instance be installed and register in the Session Initiation Protocol registry server or SIP registry server of the OTT application provider that calls destined to the real subscriber number 831 can be terminated at this OTT application 835, e.g. at its Viber subscription. Consequently, also the test call from test probe 810 may be terminated at the OTT application 835 as a result of which it will disturb the subscriber. Thanks to installation of the virtual probe 832 and the temporary call forwarding from the OTT application 835 to the virtual probe 832, it is made possible to avoid that incoming test call disturbs the subscriber as the virtual probe 832 will not make the subscriber's appliance ring, buzz or vibrate to notify an incoming call. The virtual probe 832 will only extract useful information from an incoming call, like the CLI, enabling the test call platform 840 to detect bypass activity.

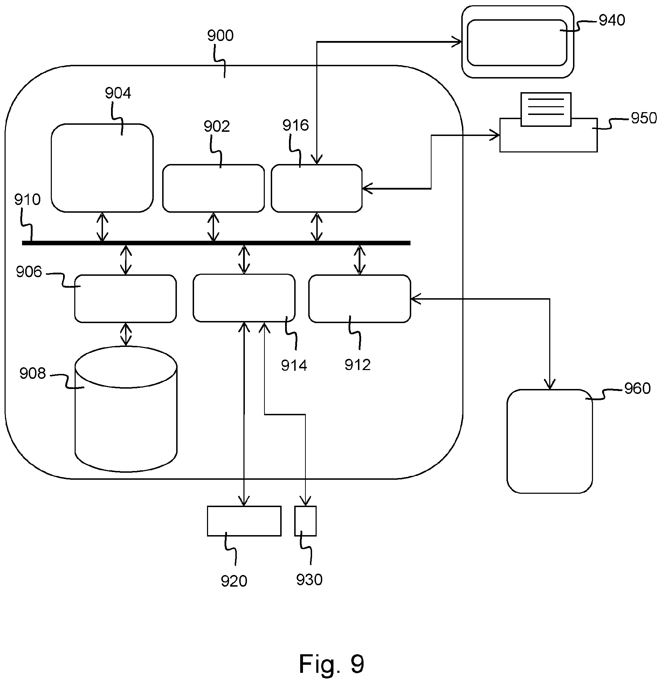

Fig. 9 shows a suitable computing system 900 for hosting the system for bypass detection according to the invention, embodiments of which are drawn in Fig. 1 - Fig 8. Computing system 900 may in general be formed as a suitable general purpose computer and comprise a bus 910, a processor 902, a local memory 904, one or more optional input interfaces 914, one or more optional output interfaces 916, a communication interface 912, a storage element interface 906 and one or more storage elements 908. Bus 910 may comprise one or more conductors that permit communication among the components of the computing system. Processor 902 may include any type of conventional processor or microprocessor that interprets and executes programming instructions. Local memory 904 may include a random access memory (RAM) or another type of dynamic storage device that stores information and instructions for execution by processor 902 and/or a read only memory (ROM) or another type of static storage device that stores static information and instructions for use by processor 904. Input interface 914 may comprise one or more conventional mechanisms that permit an operator to input information to the computing device 900, such as a keyboard 920, a mouse 930, a pen, voice recognition and/or biometric mechanisms, etc. Output interface 916 may comprise one or more conventional mechanisms that output information to the operator, such as a display 940, a printer 950, a speaker, etc. Communication interface 912 may comprise any transceiver-like mechanism such as for example two 1Gb Ethernet interfaces that enables computing system 900 to communicate with other devices and/or systems, for example mechanisms for communicating with one or more other computing systems. The communication interface 912 of computing system 900 may be connected to such another computing system 960 by means of a local area network (LAN) or a wide area network (WAN, such as for example the internet, in which case the other computing system may for example comprise a suitable web server. Storage element interface 906 may comprise a storage interface such as for example a Serial Advanced Technology Attachment (SATA) interface or a Small Computer System Interface (SCSI) for connecting bus 910 to one or more storage elements 908, such as one or more local disks, for example 1TB SATA disk drives, and control the reading and writing of data to and/or from these storage elements 908. Although the storage elements 908 above is described as a local disk, in general any other suitable computer-readable media such as a removable magnetic disk, optical storage media such as a CD or DVD, -ROM disk, solid state drives, flash memory cards, ... could be used.

The steps executed in the method for bypass detection according to the present invention, illustrated by the above embodiments, may be implemented as programming instructions stored in local memory 904 of the computing system 900 for execution by its processor 902. Alternatively the instructions may be stored on the storage element 908 or be accessible from another computing system through the communication interface 912.

It is remarked that although reference was made to SS7 in various embodiment descriptions here above, the present invention is not restricted to the use or analysis of particular signalling like SS7 signalling. More recent protocols like the Session Initiation Protocol, abbreviated SIP, and/or the DIAMETER protocol, or even alternative, future protocols may be used to implement variant, possibly more efficient embodiments of the present invention.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope of the invention as it is depicted by the appended claims. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for detection of a bypass (134; 734; 834) of an interconnect (133; 733; 833) to a telecommunication network (130; 730; 830), of an operator of a real subscriber, comprising:
- generating a test call (263; 367; 467; 567; 663) to or through a real subscriber number of a real subscriber (131; 231; 331; 431; 531; 631; 731; 831) active in said telecommunication network;
- obtaining call data (154) including received calling line identifiers and time information for calls terminating to said real subscriber number from the operator of said real subscriber (131; 231; 331; 431; 531; 631; 731; 831);
- extracting a received calling line identifier for said test call (263; 367; 467; 567; 663) from said call data (154, 153; 265; 372; 472; 572; 665; 753; 853) comprising matching said time information received from said operator with timing of said test call (263; 367; 467; 567; 663); and
- detecting presence of a bypass (134; 734; 834) by analysis of said received calling line identifier, by verifying if said received calling line identifier belongs to the numbering plan of said telecommunication network (130; 730; 830) wherein said test call (263; 367; 467; 567; 663) is received, or by verifying the country code, or by establishing that said received calling line identifier does not correspond to the calling line identifier of an origin of said test call (263; 367; 467; 567; 663).

2. A method for detection of a bypass (134; 734) of an interconnect (133; 733) to a telecommunication network (130; 730) according to claim 1,
wherein said call data (154; 753) are obtained from said operator of said real subscriber (131; 731).

3. A method for detection of a bypass (134; 734) of an interconnect (133; 733) to a telecommunication network (130; 730) according to claim 2,
wherein said call data (154) comprise Call Data Records; and
wherein detecting presence of a bypass (134) comprises:
- CDR matching in order to determine a CDR matching with said test call;
- using a calling line identifier in said CDR matching with said test call to identify said bypass (134).

4. A method for detection of a bypass (134; 734) of an interconnect (133; 733) to a telecommunication network (130; 730) according to claim 2 or claim 3,
wherein said Call Data Records comprise one or more of:
- CDRs automatically generated by said operator for billing purposes; or
- CDRs of call attempts generated for not connected calls by said operator; or
- CDRs made accessible by said operator for profiling purposes; or
- CDRs or similar records generated by signalling monitoring systems.

5. A method for detection of a bypass (134; 734; 834) of an interconnect (133; 733; 833) to a telecommunication network (130; 730; 830) according to any one of the preceding claims, further comprising:
- selecting said real subscriber number of said real subscriber (131; 231; 331; 431; 531; 631; 731; 831) from an intelligent list of real subscribers received from said operator of said telecommunication network (130; 730: 830).

6. A method for detection of a bypass (134; 734; 834) of an interconnect (133; 733; 833) to a telecommunication network (130; 730; 830) according to claim 5, wherein said intelligent list comprises one or more of:
- subscriber numbers of real subscribers of said telecommunication network (130; 730; 830) that in recent past received an amount of international calls exceeding a certain threshold;
- recycled subscriber numbers of real subscribers of said telecommunication network (130; 730; 830) that recently unsubscribed from said telecommunication network (130; 730; 830);
- subscriber numbers that form part of a new range of yet unused real subscriber numbers from said telecommunication network (130; 730; 830);
- subscriber numbers of real subscribers of said telecommunication network (130; 730; 830) that were never before configured in call forward mode.

7. A method for detection of a bypass (134; 734; 834) of an interconnect (133; 733; 833) to a telecommunication network (130; 730; 830) according to claim 5 or claim 6, wherein certain high profile real subscribers of said telecommunication network (130; 730; 830) have been removed from said intelligent list.

8. A method for detection of a bypass (134; 734; 834) of an interconnect (133; 733; 833) to a telecommunication network (130; 730; 830) according to any one of the preceding claims, further comprising:
- sending a message to said real subscriber number to inform said real subscriber that his number will temporarily be out of service for a test.

9. A system for detection of a bypass (134; 734; 834) of an interconnect (133; 733; 833) to a telecommunication network (130; 730; 830), of an operator of a real subscriber, said system comprising:
- means (110; 210; 310; 410; 510; 610; 710; 810) adapted to originate a test call (263; 367; 467; 567; 663) to or through a real subscriber number of a real subscriber (131; 231; 331; 431; 531; 631; 731; 831) of said telecommunication network (130; 730; 830); and
- a control system (140; 240; 340; 440; 540; 640; 740; 840) configured to:
• control initiation of said test call (263; 367; 467; 567; 663) to or through said real subscriber number;
• receive call data (154) including received calling line identifiers and time information for calls terminating to said real subscriber number from the operator of said real subscriber (131; 231; 331; 431; 531; 631; 731; 831);
• extract a received calling line identifier for said test call (263; 367; 467; 567; 663) from said call data (154, 153; 265; 372; 472; 572; 665; 753; 853) comprising matching said time information received from said operator with timing of said test call (263; 367; 467; 567; 663); and
• detect presence of a bypass (134; 734; 834) by analysis of said received calling line identifier, by verifying if said received calling line identifier belongs to the numbering plan of said telecommunication network (130; 730; 830) wherein said test call (263; 367; 467; 567; 663) is received, or by verifying the country code, or by establishing that said received calling line identifier does not correspond to the calling line identifier of an origin of said test call (263; 367; 467; 567; 663).

## Patentansprüche

1. Verfahren zur Erfassung einer Umgehung (134; 734; 834) einer Zwischenverbindung (133; 733; 833) zu einem Telekommunikationsnetz (130; 730; 830) eines Betreibers eines echten Teilnehmers, umfassend:
- Erzeugen eines Testanrufs (263; 367; 467; 567; 663) zu oder durch eine echte Teilnehmernummer eines echten Teilnehmers (131; 231; 331; 431; 531; 631; 731; 831), der in dem Telekommunikationsnetz aktiv ist;
- Erhalten von Anrufdaten (154), die empfangene Anrufleitungskennungen und Zeitinformationen für Anrufe beinhalten, die an der echten Teilnehmernummer enden, von dem Betreiber des echten Teilnehmers (131; 231; 331; 431; 531; 631; 731; 831);
- Extrahieren einer empfangenen Anrufleitungskennung für den Testanruf (263; 367; 467; 567; 663) aus den Anrufdaten (154, 153; 265; 372; 472; 572; 665; 753; 853), umfassend das Abgleichen der Zeitinformationen, die von dem Betreiber empfangen werden, mit Timing des Testanrufs (263; 367; 467; 567; 663); und
- Erfassen des Vorhandenseins einer Umgehung (134; 734; 834) durch Analyse der empfangenen Anrufleitungskennung, indem verifiziert wird, ob die empfangene Anrufleitungskennung zu dem Rufnummernplan des Telekommunikationsnetzes (130; 730; 830) gehört, in dem der Testanruf (263; 367; 467; 567; 663) empfangen wird, oder indem der Ländercode verifiziert wird oder indem festgestellt wird, dass die empfangene Anrufleitungskennung nicht der Anrufleitungskennung eines Ursprungs des Testanrufs (263; 367; 467; 567; 663) entspricht.

2. Verfahren zur Erfassung einer Umgehung (134; 734) einer Zwischenverbindung (133; 733) zu einem Telekommunikationsnetz (130; 730) nach Anspruch 1,
wobei die Anrufdaten (154; 753) von dem Betreiber des echten Teilnehmers (131; 731) erhalten werden.

3. Verfahren zur Erfassung einer Umgehung (134; 734) einer Zwischenverbindung (133; 733) zu einem Telekommunikationsnetz (130; 730) nach Anspruch 2,
wobei die Anrufdaten (154) Anrufdatenaufzeichnungen umfassen; und
wobei das Erfassen des Vorhandenseins einer Umgehung (134) Folgendes umfasst:
- CDR-Abgleichen, um eine CDR zu bestimmen, die mit dem Testanruf übereinstimmt;
- Verwenden einer Anrufleitungskennung in der CDR, die mit dem Testanruf übereinstimmt, um die Umgehung (134) zu identifizieren.

4. Verfahren zur Erfassung einer Umgehung (134; 734) einer Zwischenverbindung (133; 733) zu einem Telekommunikationsnetz (130; 730) nach Anspruch 2 oder Anspruch 3,
wobei die Anrufdatenaufzeichnungen eines oder mehrere von Folgendem umfassen:
- CDRs, die automatisch durch den Betreiber für Abrechnungszwecke erzeugt werden; oder
- CDRs von Anrufversuchen, die für nicht verbundene Anrufe durch den Betreiber erzeugt werden; oder
- CDRs, die durch den Betreiber zu Profilierungszwecken zugänglich gemacht werden; oder
- CDRs oder ähnliche Aufzeichnungen, die durch Signalisierungsüberwachungssysteme erzeugt werden.

5. Verfahren zur Erfassung einer Umgehung (134; 734; 834) einer Zwischenverbindung (133; 733; 833) zu einem Telekommunikationsnetz (130; 730; 830) nach einem der vorhergehenden Ansprüche, ferner umfassend:
- Auswählen der echten Teilnehmernummer des echten Teilnehmers (131; 231; 331; 431; 531; 631; 731; 831) aus einer intelligenten Liste von echten Teilnehmern, die von dem Betreiber des Telekommunikationsnetzes (130; 730; 830) empfangen wird.

6. Verfahren zur Erfassung einer Umgehung (134; 734; 834) einer Zwischenverbindung (133; 733; 833) zu einem Telekommunikationsnetz (130; 730; 830) nach Anspruch 5, wobei die intelligente Liste eines oder mehrere von Folgendem umfasst:
- Teilnehmernummern von echten Teilnehmern des Telekommunikationsnetzes (130; 730; 830), die in der jüngeren Vergangenheit eine Anzahl an internationalen Anrufen erhalten haben, die einen bestimmten Schwellenwert übersteigt;
- wiedergewonnene Teilnehmernummern von echten Teilnehmern des Telekommunikationsnetzes (130; 730; 830), die sich kürzlich von dem Telekommunikationsnetz (130; 730; 830) abgemeldet haben;
- Teilnehmernummern, die Teil eines neuen Bereichs von noch unbenutzten echten Teilnehmernummern von dem Telekommunikationsnetz (130; 730; 830) bilden;
- Teilnehmernummern von echten Teilnehmern des Telekommunikationsnetzes (130; 730; 830), die nie zuvor in Rufumleitungsmodus konfiguriert waren.

7. Verfahren zur Erfassung einer Umgehung (134; 734; 834) einer Zwischenverbindung (133; 733; 833) zu einem Telekommunikationsnetz (130; 730; 830) nach Anspruch 5 oder Anspruch 6, wobei bestimmte hochrangige echte Teilnehmer des Telekommunikationsnetzes (130; 730; 830) von der intelligenten Liste entfernt worden sind.

8. Verfahren zur Erfassung einer Umgehung (134; 734; 834) einer Zwischenverbindung (133; 733; 833) zu einem Telekommunikationsnetz (130; 730; 830) nach einem der vorhergehenden Ansprüche, ferner umfassend:
- Senden einer Nachricht an die echte Teilnehmernummer, um den echten Teilnehmer zu informieren, dass seine Nummer für einen Test vorübergehend außer Betrieb sein wird.

9. System zur Erfassung einer Umgehung (134; 734; 834) einer Zwischenverbindung (133; 733; 833) zu einem Telekommunikationsnetz (130; 730; 830) eines Betreibers eines echten Teilnehmers, wobei das System Folgendes umfasst:
- Mittel (110; 210; 310; 410; 510; 610; 710; 810), die ausgelegt sind, um einen Testanruf (263; 367; 467; 567; 663) zu oder über eine echte Teilnehmernummer eines echten Teilnehmers (131; 231; 331; 431; 531; 631; 731; 831) des Telekommunikationsnetzes (130; 730; 830) zu initiieren; und
- ein Steuersystem (140; 240; 340; 440; 540; 640; 740; 840), das für Folgendes konfiguriert ist:
• Steuern der Initiierung des Testanrufs (263; 367; 467; 567; 663) zu oder durch die echte Teilnehmernummer;
• Empfangen von Anrufdaten (154), die empfangene Anrufleitungskennungen und Zeitinformationen für Anrufe beinhalten, die an der echten Teilnehmernummer enden, von dem Betreiber des echten Teilnehmers (131; 231; 331; 431; 531; 631; 731; 831);
• Extrahieren einer empfangenen Anrufleitungskennung für den Testanruf (263; 367; 467; 567; 663) aus den Anrufdaten (154, 153; 265; 372; 472; 572; 665; 753; 853), umfassend das Abgleichen der Zeitinformationen, die von dem Betreiber empfangen werden, mit dem Timing des Testanrufs (263; 367; 467; 567; 663); und
• Erfassen von Vorhandensein einer Umgehung (134; 734; 834) durch Analyse der empfangenen Anrufleitungskennung, indem verifiziert wird, ob die empfangene Anrufleitungskennung zu dem Rufnummernplan des Telekommunikationsnetzes (130; 730; 830) gehört, in dem der Testanruf (263; 367; 467; 567; 663) empfangen wird, oder indem der Ländercode verifiziert wird oder indem festgestellt wird, dass die empfangene Anrufleitungskennung nicht der Anrufleitungskennung eines Ursprungs des Testanrufs (263; 367; 467; 567; 663) entspricht.

## Revendications

1. Procédé permettant la détection d'une dérivation (134 ; 734 ; 834) d'une interconnexion (133 ; 733 ; 833) à un réseau de télécommunication (130 ; 730 ; 830), d'un opérateur d'un abonné réel, comprenant :
- la génération d'un appel d'essai (263 ; 367 ; 467 ; 567 ; 663) à destination ou par l'intermédiaire d'un numéro d'abonné réel d'un abonné réel (131 ; 231 ; 331 ; 431 ; 531 ; 631 ; 731 ; 831) actif dans ledit réseau de télécommunication ;
- l'obtention des données d'appel (154) comprenant des identifiants de ligne d'appel reçus et des informations temporelles pour des appels aboutissant audit numéro d'abonné réel auprès de l'opérateur dudit abonné réel (131 ; 231 ; 331 ; 431 ; 531 ; 631 ; 731 ; 831) ;
- l'extraction d'un identifiant de ligne d'appel reçu pour ledit appel d'essai (263 ; 367 ; 467 ; 567 ; 663) à partir desdites données d'appel (154, 153 ; 265 ; 372 ; 472 ; 572 ; 665 ; 753 ; 853) comprenant la mise en correspondance desdites informations temporelles reçues en provenance dudit opérateur avec le minutage dudit appel d'essai (263 ; 367 ; 467 ; 567 ; 663) ; et
- la détection de la présence d'une dérivation (134 ; 734 ; 834) par analyse dudit identifiant de ligne d'appel reçu, en vérifiant si ledit identifiant de ligne d'appel reçu appartient au plan de numérotation dudit réseau de télécommunication (130 ; 730 ; 830), ledit appel d'essai (263 ; 367 ; 467 ; 567 ; 663) étant reçu, ou en vérifiant l'indicatif de pays, ou en établissant que ledit identifiant de ligne d'appel reçu ne correspond pas à l'identifiant de ligne d'appel d'une origine dudit appel d'essai (263 ; 367 ; 467 ; 567 ; 663).

2. Procédé permettant la détection d'une dérivation (134 ; 734) d'une interconnexion (133 ; 733) à un réseau de télécommunication (130 ; 730) selon la revendication 1, lesdites données d'appel (154 ; 753) étant obtenues à partir dudit opérateur dudit abonné réel (131 ; 731).

3. Procédé permettant la détection d'une dérivation (134 ; 734) d'une interconnexion (133 ; 733) pour un réseau de télécommunication (130 ; 730) selon la revendication 2,
lesdites données d'appel (154) comprenant des enregistrements de données d'appel ; et
ladite détection de la présence d'une dérivation (134) comprenant :
- la mise en correspondance de CDR afin de déterminer une mise en correspondance de CDR avec ledit appel d'essai ;
- l'utilisation d'un identifiant de ligne d'appel dans ladite mise en correspondance de CDR avec ledit appel d'essai pour identifier ladite dérivation (134).

4. Procédé permettant la détection d'une dérivation (134 ; 734) d'une interconnexion (133 ; 733) à un réseau de télécommunication (130 ; 730) selon la revendication 2 ou la revendication 3,
lesdits enregistrements de données d'appel comprenant un ou plusieurs parmi :
- des CDR générés automatiquement par ledit opérateur à des fins de facturation ; ou
- des CDR de tentatives d'appel générés pour des appels non connectés par ledit opérateur ; ou
- des CDR rendus accessibles par ledit opérateur à des fins de profilage ; ou
- des CDR ou enregistrements similaires générés par des systèmes de surveillance de signalisation.

5. Procédé permettant la détection d'une dérivation (134 ; 734 ; 834) d'une interconnexion (133 ; 733 ; 833) à un réseau de télécommunication (130 ; 730 ; 830) selon l'une quelconque des revendications précédentes, comprenant en outre :
- la sélection dudit numéro d'abonné réel dudit abonné réel (131 ; 231 ; 331 ; 431 ; 531 ; 631 ; 731 ; 831) à partir d'une liste intelligente d'abonnés réels reçue en provenance dudit opérateur dudit réseau de télécommunication (130 ; 730 : 830).

6. Procédé permettant la détection d'une dérivation (134 ; 734 ; 834) d'une interconnexion (133 ; 733 ; 833) à un réseau de télécommunication (130 ; 730 ; 830) selon la revendication 5, ladite liste intelligente comprenant un ou plusieurs parmi :
- des numéros d'abonnés d'abonnés réels dudit réseau de télécommunication (130 ; 730 ; 830) qui, récemment, ont reçu une quantité d'appels internationaux dépassant un certain seuil ;
- des numéros d'abonnés recyclés d'abonnés réels dudit réseau de télécommunication (130 ; 730 ; 830) qui se sont récemment désabonnés dudit réseau de télécommunication (130 ; 730 ; 830) ;
- des numéros d'abonnés qui forment partie d'une nouvelle plage de numéros d'abonnés réels encore inutilisés dudit réseau de télécommunication (130 ; 730 ; 830) ;
- des numéros d'abonnés d'abonnés réels dudit réseau de télécommunication (130 ; 730 ; 830) qui n'avaient jamais été configurés auparavant en mode renvoi d'appel.

7. Procédé permettant la détection d'une dérivation (134 ; 734 ; 834) d'une interconnexion (133 ; 733 ; 833) à un réseau de télécommunication (130 ; 730 ; 830) selon la revendication 5 ou la revendication 6, certains abonnés réels de haut profil dudit réseau de télécommunication (130 ; 730 ; 830) ayant été supprimés de ladite liste intelligente.

8. Procédé permettant la détection d'une dérivation (134 ; 734 ; 834) d'une interconnexion (133 ; 733 ; 833) à un réseau de télécommunication (130 ; 730 ; 830) selon l'une quelconque des revendications précédentes, comprenant en outre :
- l'envoi d'un message audit numéro d'abonné réel pour informer ledit abonné réel que son numéro sera temporairement hors service pour un essai.

9. Système destiné à la détection d'une dérivation (134 ; 734 ; 834) d'une interconnexion (133 ; 733 ; 833) à un réseau de télécommunication (130 ; 730 ; 830), d'un opérateur d'un abonné réel, ledit système comprenant :
- des moyens (110 ; 210 ; 310 ; 410 ; 510 ; 610 ; 710 ; 810) adaptés pour lancer un appel d'essai (263 ; 367 ; 467 ; 567 ; 663) à destination ou par l'intermédiaire d'un numéro d'abonné réel d'un abonné réel (131 ; 231 ; 331 ; 431 ; 531 ; 631 ; 731 ; 831) dudit réseau de télécommunication (130 ; 730 ; 830) ; et
- un système de commande (140 ; 240 ; 340 ; 440 ; 540 ; 640 ; 740 ; 840) configuré pour :
• commander le lancement dudit appel d'essai (263 ; 367 ; 467 ; 567 ; 663) à destination ou par l'intermédiaire dudit numéro d'abonné réel ;
• recevoir des données d'appel (154) comprenant des identifiants de ligne d'appel reçus et des informations temporelles pour des appels aboutissant audit numéro d'abonné réel de l'opérateur dudit abonné réel (131 ; 231 ; 331 ; 431 ; 531 ; 631 ; 731 ; 831) ;
• extraire un identifiant de ligne d'appel reçu pour ledit appel d'essai (263 ; 367 ; 467 ; 567 ; 663) à partir desdites données d'appel (154, 153 ; 265 ; 372 ; 472 ; 572 ; 665 ; 753 ; 853) comprenant la mise en correspondance desdites informations temporelles reçues en provenance dudit opérateur avec le minutage dudit appel d'essai (263 ; 367 ; 467 ; 567 ; 663) ; et
• détecter la présence d'une dérivation (134 ; 734 ; 834) par analyse dudit identifiant de ligne d'appel reçu, en vérifiant si ledit identifiant de ligne d'appel reçu appartient au plan de numérotation dudit réseau de télécommunication (130 ; 730 ; 830), ledit appel d'essai (263 ; 367 ; 467 ; 567 ; 663) étant reçu, ou en vérifiant l'indicatif de pays, ou en établissant que ledit identifiant de ligne d'appel reçu ne correspond pas à l'identifiant de ligne d'appel d'une origine dudit appel d'essai (263 ; 367 ; 467 ; 567 ; 663).
